(19) **Europäisches Patentamt / European Patent Office / Office européen des brevets**

(11) **EP 2 979 980 B1**

(12) **FASCICULE DE BREVET EUROPEEN**

(45) Date de publication et mention de la délivrance du brevet:
**24.08.2016 Bulletin 2016/34**

(51) Int Cl.:
**B64D 15/20** (2006.01)  **G08B 19/02** (2006.01)

(21) Numéro de dépôt: **15175834.9**

(22) Date de dépôt: **08.07.2015**

(54) **PROCÉDÉ ET DISPOSITIF POUR DÉTECTER QU'UN AÉRONEF VOLE DANS DES CONDITIONS GIVRANTES**

**VERFAHREN UND VORRICHTUNG ZUM ERFASSEN, OB EIN FLUGZEUG IN VEREISUNGSKONDITIONEN FLIEGT**

**METHOD AND DEVICE FOR DETECTING WHEN AN AIRCRAFT FLIES IN ICING CONDITIONS**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.07.2014 FR 1401738**

(43) Date de publication de la demande:
**03.02.2016 Bulletin 2016/05**

(73) Titulaire: **Airbus Helicopters**
**13725 Marignane Cedex (FR)**

(72) Inventeurs:
• **ROSSOTTO, Régis**
**13012 MARSEILLE (FR)**
• **CAMHI, Emmanuel**
**13710 FUVEAU (FR)**

(74) Mandataire: **Pouillot, Laurent Pierre Paul**
**GPI & Associés**
**1330, Rue Guillibert de la Lauzière**
**EuroParc de Pichaury, Bât B2**
**13856 Aix-en-Provence Cedex 3 (FR)**

(56) Documents cités:
EP-A1- 2 623 746    GB-A- 2 046 690
GB-A- 2 259 895    US-A1- 2014 090 456
US-B1- 6 304 194

**Description**

La présente invention concerne un procédé et un dispositif de détection de givrage d'une entrée d'air d'un turbomoteur. L'invention se situe plus particulièrement dans le domaine des systèmes de détection de givrage d'un moteur d'un aéronef.

Un aéronef et notamment un giravion est susceptible de rencontrer durant un vol des conditions givrantes. Ainsi, du givre peut s'accumuler sur certaines parties de l'aéronef en fonction des conditions climatiques.

Plus précisément, du givre peut se déposer sur des organes d'une entrée d'air. Par exemple, le turbomoteur peut comporter une grille de protection de l'entrée d'air susceptible de capter du givre dans des conditions environnementales givrantes.

Ce givre peut tendre à obturer au moins partiellement l'entrée d'air.

Le givre peut aussi se détacher est être ingéré par le turbomoteur. Le givre ingéré peut alors dégrader des aubes du compresseur du turbomoteur et/ou provoquer une extinction du turbomoteur.

Dès lors, certains aéronefs ne sont pas autorisés à voler dans des conditions givrantes. Malgré cette interdiction, des règlements de certification imposent à un constructeur de démontrer que le vol dans des conditions givrantes est possible durant un temps limité.

Ce temps limité est déterminé en fonction du temps nécessaire pour qu'un pilote prenne connaissance de la présence de conditions givrantes et/ ou du temps nécessaire pour sortir de ces conditions givrantes, par exemple en se rapprochant du sol.

D'autres aéronefs sont équipés de dispositifs pour voler dans des conditions givrantes limitées. Ces dispositifs peuvent alors être activés durant une phase de vol dans des conditions givrantes.

Indépendamment de la faculté de l'aéronef à voler dans des conditions givrantes, un système de l'aéronef ou un équipage peut être amené à déterminer la présence de conditions givrantes.

Une telle détection de conditions givrantes repose parfois sur la capacité du pilote à détecter ces conditions. En effet, la mesure de la température extérieure n'est pas suffisante pour permettre d'affirmer que l'aéronef vole dans des conditions givrantes. Dès lors, un pilote détecte parfois la présence de conditions givrantes en observant la verrière de l'aéronef ou certains équipements débouchant sur l'extérieur. Ainsi, la présence de givre sur la verrière ou sur des sondes extérieures est le principal indicateur pour le pilote de conditions givrantes.

Certains aéronefs sont alors par exemple équipés de capteurs de givre. L'emplacement des capteurs de givre doit être choisi avec soin.

Le document US 6304194 B1 décrit une méthode de détection de givrage sur un rotor basculant d'un aéronef. Le rotor pouvant basculer d'une position de vol stationnaire vers une position de vol d'avancement, l'agencement de capteurs de givre peut s'avérer délicat.

Selon cette méthode, on mesure le couple du rotor, dit « couple mesuré » par commodité, et la poussée générée par ce rotor dite « poussée mesurée » par commodité. On compare alors le couple mesuré et la poussée mesurée à un modèle et on génère un signal d'erreur résultant de la comparaison.

De plus, on compare le signal transmis par un capteur de givre à un modèle, et on modifie ledit signal d'erreur en fonction de cette comparaison.

Le document WO2008/138846 décrit une méthode basée sur l'utilisation d'un dispositif témoin.

Ainsi, une surface de ce dispositif témoin est recouverte d'un matériau susceptible de capter de la glace. Cette surface est alors mise en mouvement à une vitesse prédéterminée et un temps prédéterminé.

L'épaisseur ou la masse de la glace captée est alors mesurée pour déterminer la concentration de neige et d'eau surfondues dans l'air.

Le document EP2657133 présente un dispositif de protection contre le givre muni notamment d'un capteur de givre pour commander les sources d'énergie destinées à lutter contre la formation ou l'accumulation du givre.

Le document EP 2110314 est éloigné de la problématique de détection de conditions givrantes en proposant un procédé et un dispositif de protection contre le givre. Un tel dispositif comporte des composants électriques chauffants.

De même, le document US8049147 décrit un système muni de trois réchauffeurs destinés à prévenir le givrage d'une turbine.

Le document US 7374404 est aussi éloigné de la problématique de l'invention. En effet, ce document US 7374404 suggère d'appliquer un revêtement en polyuréthane sur certaines parties d'une pale d'une turbomachine afin de prévenir l'accumulation excessive de glace.

Le document US 2014/0090456 est éloigné de l'invention.

Selon ce document US 2014/0090456, la température et la pression de l'air à l'entrée d'un compresseur d'une turbomachine doivent être surveillées précisément pour contrôler correctement ce turbomoteur. Cette température et cette pression peuvent être utilisées pour détecter la présence de givre.

Dès lors, ce document US 2014/0090456 décrit un système pour déceler un défaut de mesure à partir d'un modèle théorique du turbomoteur, d'un module de comparaison, et d'un module d'estimation de conditions d'entrée.

Le modèle moteur permet d'établir la valeur estimée d'au moins un paramètre moteur, chaque paramètre moteur étant à choisir dans une liste comportant la vitesse de rotation d'un organe tournant du moteur, une pression de combustion et une température de gaz d'échappement.

Le module de comparaison est alors configuré pour établir la différence entre des valeurs mesurées de ces paramètres du moteur et les valeurs estimées.

Cette différence est utilisée par le module d'estimation pour ajuster des paramètres d'entrée du moteur utilisés par des lois de contrôle du moteur. Ces paramètres d'entrée incluent la température et la pression de l'air à l'entrée d'un compresseur du moteur.

Par ailleurs, des capteurs mesurent la valeur de ces paramètres d'entrée.

Si les valeurs mesurées des paramètres d'entrée diffèrent de l'estimation faite par le module d'estimation, un signal d'erreur est émis. De plus, l'estimation des paramètres d'entrée est utilisée pour générer les lois de contrôle. Dans la négative, les valeurs mesurées des paramètres d'entrée sont utilisées pour générer les lois de contrôle.

Les documents GB 2259895 et GB 2046690 sont aussi connus.

Le document EP2623746 est éloigné de l'invention en ayant par pour objet de détecter des conditions givrantes, ce document Ep2623746 visant l'optimisation de performances.

L'invention a pour objet de déterminer de manière automatique la présence de conditions givrantes, à savoir en n'impliquant pas une surveillance active d'un pilote.

L'invention concerne donc un procédé pour détecter qu'un aéronef vole dans des conditions givrantes, cet aéronef étant muni d'au moins un turbomoteur recevant de l'air provenant d'un milieu extérieur à l'aéronef par une entrée d'air, le turbomoteur comprenant un générateur de gaz muni d'au moins un compresseur et d'une chambre de combustion, le turbomoteur comprenant un ensemble de puissance muni d'au moins une turbine de puissance mise en rotation par des gaz s'échappant de ladite chambre de combustion.

La turbine de puissance est alors reliée à au moins un organe de sustentation et / ou de propulsion de l'aéronef. Par exemple, la turbine de puissance est au moins reliée par une boîte de transmission de puissance à un rotor de sustentation et / ou de propulsion.

Une telle turbine de puissance est parfois appelée « turbine de travail » en raison de sa fonction qui consiste à mettre en mouvement un organe extérieur au turbomoteur, par opposition à une turbine du générateur de gaz par exemple.

La turbine de puissance peut être une turbine liée au générateur de gaz ou indépendante du générateur de gaz.

Par ailleurs, le procédé est notamment remarquable en ce que :

- une unité de traitement détermine une puissance réelle développée par le turbomoteur en fonction du produit du couple développé par ledit ensemble de puissance mesuré par un système de mesure du couple et d'une vitesse de rotation de l'ensemble de puissance dite « deuxième vitesse de rotation » mesurée par un système de mesure de vitesse,

- ladite unité de traitement détermine une puissance théorique que peut en théorie développer ledit turbomoteur, ladite puissance théorique étant déterminée par l'unité de traitement en fonction au moins d'un modèle théorique du turbomoteur, ledit modèle théorique fournissant une puissance en fonction au moins d'une vitesse de rotation dudit générateur de gaz dite « première vitesse de rotation » mesurée par un moyen de mesure de vitesse,

- l'unité de traitement détermine une différence dite « différence de puissance » entre ladite puissance réelle et ladite puissance théorique,

- l'unité de traitement génère une alerte pour signaler la présence de conditions givrante lorsque :

  ○ ladite différence de puissance est supérieure à un seuil de puissance prédéterminé pendant une durée supérieure à un seuil de temps, et

  ○ une température extérieure dudit milieu extérieur mesurée par un capteur de température est comprise entre un seuil inférieur de température et un seuil supérieur de température.

Par suite, l'unité de traitement reçoit en permanence la valeur du couple Tq que le turbomoteur délivre. Ce couple Tq est basé sur une mesure de type simplex réalisée sur le turbomoteur par exemple en utilisant un système de mesure du couple usuel.

De plus, l'unité de traitement reçoit en permanence la valeur d'une première vitesse de rotation de l'ensemble de puissance dite « N1 » ou « Ng » par l'homme du métier. Cette valeur est mesurée par un système de mesure de vitesse usuel.

Dès lors, l'unité de traitement détermine selon une fréquence d'échantillonnage la puissance réelle que délivre le turbomoteur.

En outre, cette unité de traitement détermine une puissance théorique. Cette puissance théorique est donnée par un modèle théorique du turbomoteur déterminé par essais. Ce modèle théorique donne la puissance théorique que devrait normalement fournir le turbomoteur en fonction de la première vitesse de rotation du générateur de gaz.

En effet, certains aéronefs et notamment des giravions ont la particularité d'avoir des entrées d'air protégées soit par des grilles, soit par des filtres à technologie vortex ou à barrière.

De ce fait, lorsque l'aéronef rencontre des conditions aérogivrantes dites plus simplement « conditions givrantes », du givre s'accumule sur les protections d'entrée d'air et obstrue partiellement le passage de l'air vers le générateur de gaz. Cette obturation crée une perte de charge entraînant une diminution de la pression de l'air entre l'infini amont et l'aval de l'entrée d'air.

Par suite, le débit carburant transmis au turbomoteur doit être augmenté pour maintenir constante la puissance délivrée par le turbomoteur.

Dans des conditions « normales », la puissance délivrée par le turbomoteur est sensiblement proportionnelle à la première vitesse de rotation N1.

Le rapport entre la puissance délivrée par le turbomoteur et la première vitesse de rotation N1 est connu et peut être modélisé par un modèle thermodynamique moteur. Ce modèle thermodynamique est le modèle théorique utilisé par l'unité de traitement.

Si l'entrée d'air est colmatée par du givre, la première vitesse de rotation N1 augmente pour maintenir constante la puissance délivrée par le turbomoteur. Le rapport entre la puissance délivrée par le turbomoteur et la première vitesse de rotation N1 est alors modifié et ne correspond plus au rapport normal.

Toutefois, ce rapport entre la puissance délivrée par le turbomoteur et la première vitesse de rotation N1 peut aussi être modifié dans des conditions non givrantes suite à un encrassement du turbomoteur, de conditions aérothermiques particulières, de manoeuvres transitoires de l'aéronef, etc..

L'utilisation de ce rapport pour déterminer des conditions givrantes n'a alors rien d'évident.

De plus, la puissance théorique peut être délicate à estimer compte tenu du vieillissement d'un turbomoteur et des pertes de puissance résultant de l'installation du turbomoteur sur un aéronef.

L'invention propose dans ce contexte de comparer la différence de puissance entre ladite puissance réelle et ladite puissance théorique à un seuil de puissance.

En effet, une augmentation de l'ordre de 1% de la perte de charge dans l'entrée d'air conduit à une perte de puissance du turbomoteur de 1% à 2% selon les conditions atmosphériques ambiantes.

Par suite, selon l'invention, si ladite différence de puissance est supérieure au seuil de puissance durant une durée significative, alors le phénomène conduisant à l'augmentation de la différence de puissance n'est pas un phénomène passager. L'entrée d'air est alors potentiellement obturée par du givre.

Par conséquent, l'invention propose de générer une alerte si en complément la température extérieure est comprise dans un intervalle de température prédéterminé.

L'invention consiste donc à vérifier en permanence qu'une pluralité de critères sont remplis. Lorsque ces critères sont remplis, l'unité de traitement en déduit une obstruction de l'entrée d'air du turbomoteur par du givre, et en informe un équipage par une alerte visuelle et/ou sonore.

Le pilote peut alors entreprendre des actions inscrites dans le manuel de vol pour optimiser la sécurité du vol.

L'invention permet donc de tendre à détecter automatiquement, à savoir sans jugement humain, la présence de givrage au niveau de l'entrée d'air d'un turbomoteur. Cette détection permet d'alerter un pilote de la présence de conditions givrantes. De manière plus générale, le procédé permet de détecter le colmatage d'une entrée d'air.

En outre, ce procédé permet également de détecter la dérive d'une information, en l'occurrence une dérive de la valeur de la puissance réelle. Cette caractéristique est intéressante lorsque cette information dépend d'une instrumentation non redondée, en l'occurrence une valeur de couple mesurée par un système simplex.

Le procédé peut de plus comporter une ou plusieurs des caractéristiques qui suivent.

Ainsi, l'unité de traitement peut déterminer la puissance théorique en fonction d'une puissance dite « puissance minimale garantie sur banc », le modèle théorique du turbomoteur fournissant la puissance minimale garantie sur banc en fonction de la pression et de la température extérieures de l'air dans le milieu extérieur, de la première vitesse de rotation et de la deuxième vitesse de rotation.

Un constructeur dispose alors le turbomoteur sur un banc moteur pour établir par des essais usuels le modèle théorique.

Par ailleurs, l'unité de traitement détermine ladite puissance théorique en fonction d'une puissance dite « puissance minimale garantie sur banc » corrigée à l'aide d'au moins un paramètre à choisir dans une liste incluant des pertes d'installation représentant les pertes de puissance résultant de l'agencement du turbomoteur sur un aéronef et une marge de fonctionnement du turbomoteur représentant une marge de puissance du turbomoteur par rapport à la puissance minimale garantie sur banc.

Dès lors, l'unité de traitement peut :

- déterminer une puissance dite « puissance minimale garantie turbomoteur installé » que le turbomoteur peut développer en étant agencé sur l'aéronef,

- déterminer ladite puissance théorique :

  ○ en ajoutant à ladite puissance minimale garantie turbomoteur installé une marge de fonctionnement obtenue lors d'un contrôle de santé moteur, et / ou

  ○ en soustrayant à ladite puissance minimale garantie turbomoteur installé des pertes d'installation qui sont fonction d'un modèle de pertes d'installation mémorisé.

En particulier, l'unité de traitement peut :

- déterminer une puissance dite « puissance minimale garantie turbomoteur installé » que le turbomoteur peut développer en étant agencé sur l'aéronef,

- déterminer une marge de fonctionnement par rapport à ladite puissance théorique minimale garantie turbomoteur installé, ladite marge de fonctionnement étant établie et transmise à l'unité de traitement par un système de contrôle de santé moteur,

- déterminer ladite puissance théorique, ladite puissance théorique étant égale à la somme de ladite marge de fonctionnement et de ladite puissance minimale garantie turbomoteur installé.

Un constructeur peut déterminer une puissance minimale garantie turbomoteur installé. Cependant, un turbomoteur donné peut produire une puissance supérieure à la puissance garantie.

Pour connaître la puissance réellement disponible en vol, un aéronef peut comprendre un système de contrôle de santé moteur.

Ce système de contrôle de santé moteur met en oeuvre un procédé pour déterminer la marge de fonctionnement du turbomoteur par rapport à la puissance minimale garantie turbomoteur installé. Le contrôle de santé moteur est effectué à un intervalle régulier de l'ordre de 25 heures.

Par suite, l'invention propose d'utiliser la dernière marge de fonctionnement connue pour déterminée la puissance théorique du turbomoteur installé sur l'aéronef.

On se référera à la littérature pour obtenir une description d'un système de contrôle de santé moteur d'un aéronef.

Pour déterminer la puissance minimale garantie turbomoteur installé, la procédure suivante peut être appliquée.

Selon cette procédure, l'unité de traitement :

- détermine une puissance dite « puissance minimale garantie sur banc » que le turbomoteur peut développer en étant agencé sur un banc,

- détermine des pertes d'installation en fonction d'un modèle de pertes d'installation mémorisé,

- détermine ladite puissance minimale garantie turbomoteur installé, ladite puissance minimale garantie turbomoteur installé étant égale à la différence de ladite puissance minimale garantie sur banc et desdites pertes d'installation.

Cette procédure suggère d'utiliser un modèle pour identifier les pertes d'installation.

En effet, la puissance délivrée par un turbomoteur peut être réduite sur un aéronef par rapport à la puissance délivrée sur un banc. Les pertes d'installation représentent alors la différence entre la puissance délivrée par le turbomoteur agencé sur un banc, et la puissance du turbomoteur « avionné ». Cette différence est fonction des types d'entrée d'air et de tuyère équipant le moteur installé sur l'aéronef. De plus, les pertes d'installation peuvent varier en fonction du cas de vol (palier, montée, stationnaire, basse ou forte vitesse, dérapage,...).

Ainsi, le modèle de pertes d'installation peut fournir lesdites pertes d'installation en fonction de la pression et de la température de l'air dans le milieu extérieur, ainsi qu'en fonction d'une vitesse de déplacement de l'aéronef.

Cette vitesse de déplacement peut être la vitesse de déplacement indiquée connue sous l'acronyme IAS pour « Indicated Air Speed » en langue Anglaise.

Le modèle de pertes d'installation peut être établi par essais.

Enfin, l'unité de traitement peut déterminer la puissance minimale garantie sur banc à partir dudit modèle théorique du turbomoteur, ledit modèle théorique du turbomoteur fournissant ladite puissance minimale garantie sur banc en fonction de la pression et de la température dudit air dans ledit milieu extérieur, de la première vitesse de rotation dudit générateur de gaz et de la deuxième vitesse de rotation.

Dès lors, durant une première phase, l'unité de traitement détermine la puissance théorique.

A cet effet, durant une première étape de la première phase, l'unité de traitement détermine la puissance minimale garantie sur banc à partir dudit modèle théorique du turbomoteur.

Durant une deuxième étape de la première phase, la puissance minimale garantie turbomoteur installé pour tenir compte des pertes d'installation.

Dès lors et durant une troisième étape de la première phase, l'unité de traitement en déduit la puissance théorique en prenant en considération la marge de fonctionnement du turbomoteur par rapport à une puissance minimale garantie.

Durant une deuxième phase réalisée par exemple concomitamment à la première phase, l'unité de traitement détermine la puissance réelle.

Durant une troisième phase de comparaison, l'unité de traitement détermine la différence de puissance entre cette puissance théorique et la puissance réelle obtenue par des mesures.

En fonction de cette différence de puissance et de la température extérieure, l'unité de traitement peut en déduire durant une quatrième phase si les conditions environnementales sont givrantes.

Par ailleurs, le seuil inférieur de température vaut par exemple -10 degrés Celsius (moins dix degrés Celsius).

Le seuil supérieur de température vaut par exemple +5 degrés Celsius.

La plage de températures en résultant est alors représentatives des températures atteintes dans des conditions givrantes.

En outre, le seuil de temps peut valoir 30 secondes.

Ce seuil de temps est suffisamment faible pour obtenir une information de conditions givrantes rapidement, et suffisamment élevé pour limiter les risques de détection de givrage intempestives.

Par ailleurs, le seuil de puissance vaut par exemple 150 Newton-mètre (Nm).

La valeur du seuil de puissance est établie lors de vols d'essais. Cette valeur prend en compte toutes les précisions de mesures, les résultats de contrôle de santé moteur, ainsi que les incertitudes dues aux effets d'installations difficilement mesurables comme un prélèvement d'air ou électrique sur le turbomoteur.

Notamment, la valeur du seuil de puissance est suffisamment élevée pour que les incertitudes mentionnées ci-dessus soient du second ordre, et ne laissent aucun doute sur le fait que la perte de puissance soit due à du givrage et seulement du givrage.

Outre un procédé, l'invention vise un dispositif de détection destiné à un aéronef pour détecter la présence de conditions givrantes à bord d'un aéronef, l'aéronef comportant au moins un turbomoteur, ledit turbomoteur comprenant un générateur de gaz muni d'au moins un compresseur et d'une chambre de combustion, le turbomoteur comprenant un ensemble de puissance muni d'au moins une turbine de puissance mise en rotation par des gaz s'échappant de ladite chambre de combustion.

Ce dispositif de détection comporte :

- un système de mesure du couple pour mesurer le couple développé par ledit ensemble de puissance,

- un système de mesure de vitesse pour mesurer une vitesse de rotation de l'ensemble de puissance dite « deuxième vitesse de rotation », et un moyen de mesure de vitesse pour mesurer une vitesse de rotation dudit générateur de gaz dite « première vitesse de rotation »,

- un système d'alerte,

- un capteur de température pour mesurer la température de l'air dans un milieu extérieur situé à l'extérieur de l'aéronef,

- une unité de traitement reliée au système de mesure du couple ainsi qu'au système de mesure de vitesse et au système d'alerte et au capteur de température, ladite unité de traitement comprenant un dispositif de stockage et un calculateur, ledit dispositif de stockage mémorisant un modèle théorique fournissant une puissance en fonction au moins de la première vitesse de rotation, ledit calculateur exécutant des instructions dudit dispositif de stockage pour mettre en oeuvre le procédé précédemment décrit.

Ce dispositif de détection peut comporter une ou plusieurs des caractéristiques qui suivent.

Ainsi, le dispositif de détection peut comporter un système de contrôle de santé moteur coopérant avec l'unité de traitement.

En outre, le dispositif de détection peut comporter un modèle de pertes d'installation mémorisé dans le dispositif de stockage.

Par ailleurs, le dispositif de détection comporte un capteur de pression pour mesurer la pression de l'air extérieur à l'aéronef.

Enfin, le dispositif de détection peut comporter un dispositif de mesure de vitesse pour mesurer la vitesse de déplacement de l'aéronef.

Outre un dispositif de détection, l'invention concerne un aéronef muni d'un turbomoteur, cet aéronef comportant un tel dispositif de détection.

L'invention et ses avantages apparaîtront avec plus de détails dans le cadre de la description qui suit avec des exemples donnés à titre illustratif en référence aux figures annexées qui représentent :

- la figure 1, une vue d'un dispositif selon l'invention, et

- la figure 2, un schéma explicitant le procédé selon l'invention,

Les éléments présents dans plusieurs figures distinctes sont affectés d'une seule et même référence.

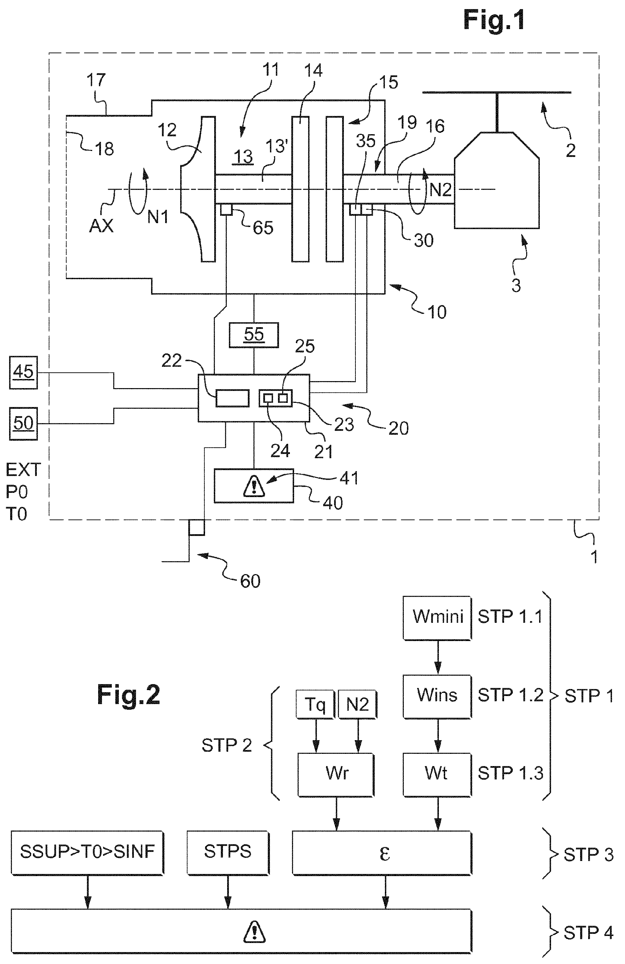

La figure 1 présente un aéronef 1 selon l'invention.

En particulier, cet aéronef 1 comporte un rotor 2 de sustentation et/ ou de propulsion. Ce rotor 2 est entraîné en rotation par une installation motrice comprenant au moins un turbomoteur 10 voire au moins une boîte de transmission de puissance 3.

Le turbomoteur 10 comprend un générateur de gaz 11. Le générateur de gaz est classiquement muni d'au moins un compresseur 12, d'une chambre de combustion 13 et d'au moins une turbine de détente 14 liée au compresseur 11 par un arbre principal 13'.

La figure 1 présente un unique compresseur 11 et une unique turbine de détente 14. Néanmoins, le nombre de compresseur(s), et de turbine(s) de détente peut être optimisé selon les besoins, et ne restreint aucunement la portée de l'invention.

De plus, le compresseur 11, la turbine de détente 14 et l'arbre principal 13' les liant mécaniquement sont aptes à effectuer conjointement un mouvement rotatif autour d'un axe longitudinal AX du turbomoteur. Plus précisément, le compresseur 11, la turbine de détente 14 et l'arbre principal 13' sont solidaires en rotation autour de cet axe longitudinal.

La vitesse de rotation du générateur de gaz doit donc être entendue comme étant la première vitesse de rotation N1 de l'ensemble tournant du générateur de gaz qui comporte le compresseur 11 ainsi que la turbine de détente 14 et l'arbre principal 13'.

Par ailleurs, le turbomoteur 10 comporte un ensemble de puissance 19 situé en aval du générateur de gaz. L'ensemble de puissance est mis en mouvement par les gaz générés par la chambre de combustion.

L'ensemble de puissance 19 comporte au moins une turbine de puissance 15 située en aval de la chambre de combustion 13. Cette turbine de puissance peut être liée au générateur de gaz ou indépendante de ce générateur de gaz selon la figure 1.

Dès lors, la turbine de puissance 15 est solidaire d'un arbre de puissance 16 apte à mettre en mouvement un élément externe au turbomoteur, tel que la boîte de transmission de puissance 3 par exemple.

La figure 1 présente un ensemble de puissance incluant une unique turbine de puissance 15. Néanmoins, le nombre de turbine(s) de puissance peut être optimisé selon les besoins, et ne restreint aucunement la portée de l'invention.

Les gaz sortant de la chambre de combustion mettent alors en rotation l'ensemble de puissance du turbomoteur à une deuxième vitesse rotation N2.

Par ailleurs, l'aéronef 1 comporte une entrée d'air 17 acheminant de l'air présent dans le milieu extérieur EXT entourant l'aéronef vers le générateur de gaz 11.

Cette entrée d'air peut comprendre un moyen de filtration 18, tel qu'une grille par exemple.

Par ailleurs, l'aéronef 1 comporte un dispositif de détection 20 pour détecter si l'aéronef vole dans des conditions givrantes.

Ce dispositif de détection 20 comporte une unité de traitement 21. L'unité de traitement 21 est munie d'un dispositif de stockage 23 et d'un calculateur 22. Le calculateur peut par exemple comprendre un processeur ou équivalent exécutant des instructions mémorisées sur le dispositif de stockage. Ce dispositif de stockage peut inclure une mémoire non volatile mémorisant de telles instructions et une mémoire volatile mémorisant des valeurs de paramètres par exemple.

L'unité de traitement peut être une partie intégrante d'un système de contrôle d'un turbomoteur, tel qu'un système connu sous l'acronyme ECU signifiant « Engine Control Unit » en langue anglaise ou sous l'acronyme FADEC signifiant « Full Authority Digital Engine Control » en langue anglaise. Dès lors, le calculateur de l'unité de traitement est le calculateur du système de contrôle, le dispositif de stockage étant le dispositif de stockage de ce système de contrôle.

Le dispositif de stockage mémorise un modèle théorique 24 de fonctionnement du turbomoteur. Ce modèle théorique 24 est usuellement obtenu par essais. Dès lors, le modèle théorique 24 détermine une puissance délivrée par l'ensemble de puissance du turbomoteur en fonction d'au moins la première vitesse de rotation N1 de ce turbomoteur.

En particulier, le modèle théorique 24 peut fournir une puissance minimale garantie sur banc Wmini du turbomoteur. Cette puissance minimale garantie sur banc Wmini représente une puissance que le constructeur garantit durant toute la durée de vie du turbomoteur. Cette puissance minimale garantie sur banc Wmini est déterminée en réalisant des essais sur un banc d'essais, et donc en dehors d'un aéronef.

Le modèle théorique 24 peut alors fournir la puissance minimale garantie sur banc Wmini en fonction :

- de la pression extérieure P0 et de la température extérieure T0 de l'air pénétrant dans le turbomoteur, et donc de l'air présent dans un milieu extérieur EXT situé en dehors de l'aéronef 1,

- de la première vitesse de rotation N1 du générateur de gaz,

- et de la deuxième vitesse de rotation N2 de l'ensemble de puissance.

Ce modèle théorique 24 peut prendre la forme d'une loi mathématique mémorisée dans le dispositif de stockage 23, ou d'une base de données par exemple.

Pour notamment déterminer la valeur des paramètres utilisés dans le modèle théorique 24, l'unité de traitement est reliée par des connections filaires et/ou non filaires à :

- un capteur de température 45 qui mesure en continu la température extérieure T0 de l'air dans le milieu extérieur EXT,

- un capteur de pression 50 qui mesure la pression extérieure P0 de cet air,

- un moyen de mesure de vitesse 65 qui mesure la première vitesse de rotation N1,

- un système de mesure de vitesse 35 usuel qui mesure la deuxième vitesse de rotation N2.

Par ailleurs, le dispositif de stockage peut mémoriser un modèle de pertes d'installations 25. Ce modèle de pertes d'installations 25 est usuellement obtenu par essais. Dès lors, le modèle de pertes d'installations 25 permet de déterminer les pertes d'installation Wpi du turbomoteur en continu durant un vol, ces pertes d'installation Wpi représentant une perte de puissance en Newton-mètre (Nm) résultant de l'installation de ce turbomoteur sur un aéronef.

Le modèle de pertes d'installations 25 peut alors fournir les pertes d'installation Wpi en fonction :

- de la pression extérieure P0 et de la température extérieure T0 de l'air pénétrant dans le turbomoteur, et donc de l'air présent dans un milieu extérieur EXT situé en dehors de l'aéronef 1,

- d'une vitesse de déplacement IAS de l'aéronef.

Pour notamment déterminer la valeur de la vitesse de déplacement IAS, l'unité de traitement est reliée par de liaisons filaires et/ou non filaires à un dispositif de mesure de vitesse 60 usuel qui mesure cette vitesse de déplacement IAS de l'aéronef.

Par ailleurs, l'unité de traitement est reliée par des liaisons filaires et/ou non filaires à un système de mesure du couple 30 usuel qui mesure le couple développé par l'ensemble de puissance 19.

En outre, le dispositif de détection 20 peut comporter un système de contrôle de santé moteur 55 usuel coopérant avec l'unité de traitement 21.

Ce système de contrôle de santé moteur 55 peut être une partie intégrante d'un système de contrôle ECU ou FADEC du turbomoteur.

Dès lors, le système de contrôle de santé moteur 55 peut être matérialisé par un segment de code stocké sur un dispositif de stockage, l'unité de traitement comprenant un autre segment de code stocké sur le dispositif de stockage.

Par ailleurs, le dispositif de détection est muni d'un système d'alerte 40 apte à générer une alerte 41 visuelle ou sonore sur ordre de l'unité de traitement 21.

Ce dispositif de détection 20 permet d'appliquer selon une fréquence d'échantillonnage prédéterminée le procédé selon l'invention illustré par la figure 2.

Durant une première phase STP 1, l'unité de traitement détermine une puissance théorique Wt devant être en théorie développée par le turbomoteur 10. Cette puissance théorique Wt représente donc la puissance que doit développer le turbomoteur dans des conditions normales, à savoir en l'absence de pannes ou de colmatage par exemple suite à un dépôt de givre.

Par suite, l'unité de traitement met en oeuvre le modèle théorique du turbomoteur pour déterminer cette puissance théorique Wt.

Par exemple, durant une première étape STP 1.1 de la première phase STP1, l'unité de traitement 32 détermine une puissance minimale garantie sur banc Wmini en appliquant le modèle théorique 24.

La puissance théorique peut être égale à cette puissance minimale garantie sur banc Wmini.

Toutefois, l'unité de traitement 21 peut déterminer la puissance théorique en corrigeant la puissance minimale garantie sur banc Wmini à l'aide d'au moins un paramètre à choisir dans une liste incluant les pertes d'installation Wpi et la marge de fonctionnement CSM.

Ainsi, durant une deuxième étape STP 1.2 de la première phase SPT1, l'unité de traitement peut corriger la puissance minimale garantie sur banc Wmini en fonction des pertes d'installations Wpi.

Par suite, l'unité de traitement détermine des pertes d'installation Wpi en fonction d'un modèle de pertes d'installation 25 mémorisé.

Dès lors, l'unité de traitement injecte par exemple dans le modèle de pertes d'installation 25 les valeurs mesurées de la pression extérieure P0, de la température extérieure T0 et de la vitesse de déplacement IAS.

L'unité de traitement en déduit alors les pertes d'installation Wpi.

Dès lors, l'unité de traitement détermine une puissance minimale garantie turbomoteur installé à partir de la relation suivante où « Wins » représente ladite puissance minimale garantie turbomoteur installé, « Wmini » représente ladite puissance minimale garantie sur banc, et « Wpi » représente les pertes d'installation, « - » représente le signe de la soustraction :

$$\text{Wins} = \text{Wmini} - \text{Wpi}$$

La puissance théorique peut alors être égale à la puissance minimale garantie turbomoteur installé Wins.

Néanmoins, durant une troisième étape STP 1.3 de la première phase SPT1, l'unité de traitement peut corriger la puissance minimale garantie turbomoteur installé Wins en fonction des marges de fonctionnement.

Dès lors, l'unité de traitement consulte la marge de fonctionne déterminée lors du dernier contrôle de santé moteur.

En effet, un contrôle de santé moteur est réalisé de manière périodique par le système de contrôle de santé moteur. A chaque contrôle de santé, le dispositif de détection mémorise la marge de fonctionnement déterminée.

Par suite, l'utilité de traitement détermine la puissance théorique à partir de la somme suivante où « Wt » représente ladite puissance théorique, « Wins » représente ladite puissance minimale garantie turbomoteur installé, « CSM » représente la marge de fonctionnement, « + » représente le signe de l'addition :

$$\text{Wt} = \text{Wins} + \text{CSM}$$

Selon une variante, la puissance théorique est obtenue en corrigeant la puissance minimale garantie sur banc en y ajoutant la marge de fonctionnement, puis en y déduisant les pertes d'installation.

Selon une autre variante, la puissance théorique est obtenue en corrigeant la puissance minimale garantie sur banc en y ajoutant la marge de fonctionnement et en y soustrayant concomitamment les pertes d'installation.

Selon une autre variante, la puissance théorique est obtenue en corrigeant la puissance minimale garantie sur banc uniquement en y ajoutant la marge de fonctionnement.

Indépendamment de la variante, l'unité de traitement détermine durant une deuxième phase STP 2 une puissance réelle Wr développée par le turbomoteur 10.

Cette phase est qualifiée de « deuxième » par commodité. Néanmoins, la deuxième phase peut être réalisée en même temps que la première phase STP 1, voire avant cette première phase STP 1.

Par suite, l'unité de traitement détermine la puissance réelle en appliquant la relation suivante où « Wr » représente ladite puissance réelle, « Tq » représente le couple mesuré par le système de mesure de couple 30, « N2 » représente la deuxième vitesse de rotation mesurée par le système de mesure de vitesse 35, « * » représente le signe de la multiplication :

$$Wr = Tq * N2$$

Durant une troisième phase STP 3, l'unité de traitement détermine si trois conditions sont remplies.

Dès lors, l'unité de traitement détermine une différence de puissance ε entre la puissance réelle Wr et la puissance théorique selon la relation suivante : ε = Wr-Wt.

Si la différence de puissance est supérieure à un seuil de puissance SP, alors l'unité de traitement en déduit que la première condition est remplie.

Le seuil de puissance SP peut valoir 150 Nm.

De plus, lorsque le seuil de puissance est dépassé, un compteur de temps s'égrène, ce compteur de temps étant comparé à un seuil de temps. Si la différence de puissance reste supérieure au seuil de puissance jusqu'à ce que le compteur de temps atteigne le seuil de temps STPS, alors l'unité de traitement en déduit que la deuxième condition est remplie.

Par conséquent, la première condition et la deuxième condition sont remplies si la différence de puissance ε est supérieure au seuil de puissance SP prédéterminé pendant une durée en continu supérieure à un seuil de temps STPS.

Par exemple, la différence de puissance ε doit rester supérieure au seuil de puissance SP pendant 30 secondes afin que l'unité de traitement considère les première et deuxième conditions remplies.

Par ailleurs, l'unité de traitement compare la température extérieure T0 à un seuil inférieur SINF de température, de l'ordre de -10 degrés Celsius et à un seuil supérieur SSUP de température, de l'ordre de +5 degrés Celsius.

Si la température extérieure est comprise entre le seuil inférieur SINF et le seuil supérieure SSUP, l'unité de traitement considère que la troisième condition est remplie.

Dès lors, durant une quatrième phase STP 4, l'unité de traitement déclenche une alerte en transmettant un signal d'alerte au système d'alerte 40 lorsque les trois conditions précédentes sont concomitamment remplies.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Procédé pour détecter qu'un aéronef (1) vole dans des conditions givrantes, ledit aéronef (1) étant muni d'au moins un turbomoteur (10) recevant de l'air provenant d'un milieu extérieur (EXT) situé à l'extérieur de l'aéronef (1) par une entrée d'air (17), ledit turbomoteur (10) comprenant un générateur de gaz (11) muni d'au moins un compresseur (12) et d'une chambre de combustion (13), ledit turbomoteur (10) comprenant un ensemble de puissance muni d'au moins une turbine de puissance (15) mise en rotation par des gaz s'échappant de ladite chambre de combustion, dans lequel :

   - une unité de traitement (21) détermine une puissance réelle (Wr) développée par ledit turbomoteur (10) en fonction du produit du couple (Tq) développé par ledit ensemble de puissance, mesuré par un système de mesure du couple (30), et d'une vitesse de rotation de l'ensemble de puissance (15) dite « deuxième vitesse de rotation (N2) » mesurée par un système de mesure de vitesse (35),
   - ladite unité de traitement (21) détermine une puissance théorique (Wt) que peut en théorie développer ledit turbomoteur (10), ladite puissance théorique (Wt) étant déterminée par l'unité de traitement (21) en fonction au moins d'un modèle théorique du turbomoteur, ledit modèle théorique fournissant une puissance en fonction au moins d'une vitesse de rotation dudit générateur de gaz dite « première vitesse de rotation (N1) » mesurée par un moyen de mesure de vitesse (65),
   - l'unité de traitement (21) détermine une différence dite « différence de puissance » (ε) entre ladite puissance réelle (Wr) et ladite puissance théorique (Wt),
   - l'unité de traitement (21) génère une alerte pour signaler la présence de conditions givrantes lorsque :

      ◦ ladite différence de puissance (ε) est supérieure à un seuil de puissance (SP) prédéterminé pendant une durée supérieure à un seuil de temps (STPS), et
      ◦ une température extérieure (T0) dudit milieu extérieur (EXT) mesurée par un capteur de température (45) est comprise entre un seuil inférieur (SINF) de température et un seuil supérieur (SSUP) de température.

**2.** Procédé selon la revendication 1, **caractérisé en ce que** l'unité de traitement (21) détermine ladite puissance théorique (Wt) en fonction d'une puissance dite « puissance minimale garantie sur banc (Wmini) », ledit modèle théorique (24) du turbomoteur fournissant ladite puissance minimale garantie sur banc (Wmini) en fonction de la pression (P0) et de la température (T0) dudit air dans ledit milieu extérieur (EXT), de ladite première vitesse de rotation (N1) et de la deuxième vitesse de rotation (N2).

**3.** Procédé selon l'une quelconque des revendications 1 à 2, **caractérisé en ce que** l'unité de traitement (21) détermine ladite puissance théorique en fonction d'une puissance dite « puissance minimale garantie sur banc (Wmini) » corrigée à l'aide d'au moins un paramètre à choisir dans une liste incluant des pertes d'installation (Wpi) représentant les pertes de puissance résultant de l'agencement du turbomoteur (10) sur un aéronef (1) et une marge de fonctionnement (CSM) du turbomoteur représentant une marge de puissance du turbomoteur par rapport à la puissance minimale garantie sur banc (Wmini).

**4.** Procédé selon l'une quelconque des revendications 1 à 3, **caractérisé en ce que** l'unité de traitement (21) :

- détermine une puissance dite « puissance minimale garantie turbomoteur installé (Wins) » que le turbomoteur peut développer en étant agencé sur l'aéronef,
- détermine une marge de fonctionnement (CSM) par rapport à ladite puissance minimale garantie turbomoteur installé (Wins), ladite marge de fonctionnement (CSM) étant établie et transmise à l'unité de traitement par un système de contrôle de santé moteur (55),
- détermine ladite puissance théorique (Wt), ladite puissance théorique (Wt) étant égale à la somme de ladite marge de fonctionnement (CSM) et de ladite puissance minimale garantie turbomoteur installé (Wins).

**5.** Procédé selon la revendication 4, **caractérisé en ce que** l'unité de traitement :

- détermine une puissance dite « puissance minimale garantie sur banc (Wmini) » que le turbomoteur peut développer en étant agencé sur un banc,
- détermine des pertes d'installation (Wpi) en fonction d'un modèle de pertes d'installation (25) mémorisé,
- détermine ladite puissance minimale garantie turbomoteur installé (Wins), ladite puissance minimale garantie turbomoteur installé (Wins) étant égale à la différence de ladite puissance minimale garantie sur banc (Wmini) et desdites pertes d'installation (Wpi).

**6.** Procédé selon la revendication 3, **caractérisé en ce que** l'unité de traitement (21) :

- détermine une puissance dite « puissance minimale garantie turbomoteur installé (Wins) » que le turbomoteur peut développer en étant agencé sur l'aéronef,
- détermine ladite puissance théorique (Wt) :

  ◦ en ajoutant à ladite puissance minimale garantie turbomoteur installé (Wins) une marge de fonctionnement (CSM) obtenue lors d'un contrôle de santé moteur, et / ou
  ◦ en soustrayant à ladite puissance minimale garantie turbomoteur installé (Wins) des pertes d'installation (Wpi) qui sont fonction d'un modèle de pertes d'installation (25) mémorisé.

**7.** Procédé selon l'une quelconque des revendications 5 à 6, **caractérisé en ce que** ledit modèle de pertes d'installation (25) fournit lesdites pertes d'installation (Wpi) en fonction de la pression (P0) et de la température (T0) dudit air dans ledit milieu extérieur (EXT) et en fonction d'une vitesse de déplacement (IAS) de l'aéronef (1).

**8.** Procédé selon l'une quelconque des revendications 5 à 6, **caractérisé en ce que** l'unité de traitement (21) détermine ladite puissance minimale garantie sur banc (Wmini) à partir dudit modèle théorique (24) du turbomoteur (10), ledit modèle théorique (24) du turbomoteur (10) fournissant ladite puissance minimale garantie sur banc (Wmini) en fonction de la pression (P0) et de la température (T0) dudit air dans ledit milieu extérieur (EXT), de la première vitesse de rotation (N1) dudit générateur de gaz (11) et de la deuxième vitesse de rotation (N2).

**9.** Procédé selon l'une quelconque des revendications 1 à 8, **caractérisé en ce que** ledit seuil inférieur (SINF) de température vaut -10 degrés Celsius.

**10.** Procédé selon l'une quelconque des revendications 1 à 9, **caractérisé en ce que** ledit seuil supérieur (SSUP) de température vaut +5 degrés Celsius.

**11.** Procédé selon l'une quelconque des revendications 1 à 10, **caractérisé en ce que** ledit seuil de temps (STPS) vaut 30 secondes.

**12.** Procédé selon l'une quelconque des revendications 1 à 11, **caractérisé en ce que** ledit seuil de puissance (SP) vaut 150 Newton-mètre.

**13.** Dispositif de détection (20) destiné à un aéronef (1) pour détecter la présence de conditions givrantes à bord d'un aéronef (1), ledit aéronef (1) comportant au moins un turbomoteur (10), ledit turbomoteur (10) comprenant un générateur de gaz (11) muni d'au moins un compresseur (12) et d'une chambre de combustion (13), ledit turbomoteur (10) comprenant un ensemble de puissance muni d'au moins une turbine de puissance (15) mise en rotation par des gaz s'échappant de ladite chambre de combustion, ledit dispositif de détection comportant :

- un moyen de mesure de vitesse (65) pour mesurer une vitesse de rotation dudit générateur de gaz dite « première vitesse de rotation »,
- un système de mesure du couple (30) pour mesurer le couple développé par ledit ensemble de puissance, **caractérisé en ce que** ledit dispositif de détection comporte :
- un système de mesure de vitesse (35) pour mesurer une vitesse de rotation de l'ensemble de puissance dite « deuxième vitesse de rotation »,
- un système d'alerte (40),
- un capteur de température (45) pour mesurer la température (T0) de l'air dans un milieu extérieur (EXT) situé à l'extérieur de l'aéronef (1),
- une unité de traitement (21) reliée au système de mesure du couple (30) ainsi qu'au système de mesure de vitesse (35) et au système d'alerte (40) et au capteur de température (45), ladite unité de traitement (21) comprenant un dispositif de stockage (23) et un calculateur (22), ledit dispositif de stockage (23) mémorisant un modèle théorique (24) fournissant une puissance en fonction au moins de la première vitesse de rotation (N1), ledit calculateur exécutant des instructions dudit dispositif de stockage pour mettre en oeuvre le procédé selon l'une quelconque des revendications 1 à 12.

**14.** Dispositif de détection selon la revendication 13, **caractérisé en ce que** ledit dispositif de détection (20) comporte un système de contrôle de santé moteur (55) coopérant avec ladite unité de traitement (21).

**15.** Dispositif de détection selon l'une quelconque des revendications 13 à 14, **caractérisé en ce que** ledit dispositif de détection (20) comporte un modèle de pertes d'installation (25) mémorisé dans ledit dispositif de stockage (23).

**16.** Dispositif de détection selon l'une quelconque des revendications 13 à 15, **caractérisé en ce que** ledit dispositif de détection (20) comporte un capteur de pression (50) pour mesurer la pression (P0) de l'air extérieur à l'aéronef (1).

**17.** Dispositif de détection selon l'une quelconque des revendications 13 à 16, **caractérisé en ce que** ledit dispositif de détection (20) comporte un dispositif de mesure de vitesse (60) pour mesurer la vitesse de déplacement (IAS) de l'aéronef.

**18.** Aéronef muni d'un turbomoteur, **caractérisé en ce que** ledit aéronef (1) comporte un dispositif de détection (20) selon l'une quelconque des revendications 13 à 17.

**Patentansprüche**

**1.** Verfahren zum Erfassen, ob ein Luftfahrzeug (1) in Vereisungskonditionen fliegt, wobei das Luftfahrzeug (1) ausgerüstet ist mit mindestens einem Turbomotor (10), der über einen Lufteinlass (17) Luft aufnimmt, die aus einer äußeren Umgebung (EXT) außerhalb des Luftfahrzeugs (1) stammt, wobei der Turbomotor (10) einen Gasgenerator (11) aufweist, der mit mindestens einem Kompressor (12) und einer Verbrennungskammer (13) ausgerüstet ist, wobei der Turbomotor (10) eine Leistungseinheit mit mindestens einer Leistungsturbine (15) aufweist, die durch Gase gedreht wird, die aus der Verbrennungskammer austreten, bei dem

- eine Verarbeitungseinheit (21) eine tatsächliche Leistung (Wr) bestimmt, die von dem Turbomotor (10) geliefert wird, in Abhängigkeit von dem Produkt aus dem von der Leistungseinheit entwickelten Drehmoment (Tq), das von einem System (30) zur Messung des Drehmoments gemessen wird, und einer Drehgeschwindigkeit der Leistungseinheit (15), die "zweite Drehgeschwindigkeit (N2)" genannt wird, die von einem System (35) zur Messung der Geschwindigkeit gemessen wird,
- die Verarbeitungseinheit (21) eine theoretische Leistung (Wt) bestimmt, die der Turbomotor (10) theoretisch entwickeln kann, wobei die theoretische Leistung (Wt) von der Verarbeitungseinheit (21) bestimmt wird in Abhängigkeit von mindestens einem theoretischen Modell des Turbomotors, wobei das theoretische Modell eine Leistung liefert in Abhängigkeit von mindestens einer Drehgeschwindigkeit des Gasgenerators, "erste Drehgeschwindigkeit (N1)" genannt, die von einem Mittel zur Messung der Geschwindigkeit (65) gemessen wird,
- die Verarbeitungseinheit (21) eine Differenz,

"Leistungsdifferenz ($\varepsilon$)" genannt, zwischen der tatsächlichen Leistung (Wr) und der theoretischen Leistung (Wt) bestimmt,

- die Verarbeitungseinheit (21) einen Alarm erzeugt, um das Vorliegen von Vereisungskonditionen zu signalisieren, wenn:

  ◦ die Leistungsdifferenz ($\varepsilon$) größer ist als ein Leistungsschwellenwert (SP), der während einer Zeitdauer, die größer als ein Schwellenwert (STPS) einer Zeitdauer ist, bestimmt wird, und

  ◦ eine Außentemperatur (T0) der äußeren Umgebung (EXT), die von einem Temperaturfühler (45) gemessen wird, zwischen einem unteren Temperatur-Schwellenwert (SINF) und einem oberen Temperatur-Schwellenwert (SSUP) liegt.

2. Verfahren nach Anspruch 1, **dadurch gekennzeichnet, dass** die Verarbeitungseinheit (21) die theoretische Leistung (Wt) in Abhängigkeit von einer Leistung, genannt "minimale, auf einer Versuchsbank garantierte Leistung (Wmini)", bestimmt, wobei das theoretische Modell (24) des Turbomotors die minimale, auf einer Versuchsbank garantierte Leistung (Wmini) in Abhängigkeit von dem Druck (P0) und der Temperatur (T0) der Luft in der Außenumgebung (EXT), der ersten Drehgeschwindigkeit (N1) und der zweiten Drehgeschwindigkeit (N2) liefert.

3. Verfahren nach einem der Ansprüche 1 bis 2, **dadurch gekennzeichnet, dass** die Verarbeitungseinheit (21) die theoretische Leistung in Abhängigkeit von einer "minimale, auf einer Versuchsbank garantierte Leistung (Wmini)" genannten Leistung bestimmt, die mindestens mit Hilfe eines Parameters korrigiert wird, der gewählt wird aus einer Liste, die die Installationsverluste (Wpi), die die Leistungsverluste darstellen, die sich aus der Anordnung des Turbomotors (10) in dem Luftfahrzeug (1) ergeben, und eine Betriebsmarge (CSM) des Turbomotors umfasst, die eine Leistungsmarge des Turbomotors relativ zu der minimalen, auf einer Versuchsbank garantierten Leistung (Wmini) darstellt.

4. Verfahren nach einem der Ansprüche 1 bis 3, **dadurch gekennzeichnet, dass** die Verarbeitungseinheit (21):

  - eine "minimale garantierte Leistung des installierten Turbomotors (Wins)" genannte Leistung bestimmt, die der Turbomotor entwickeln kann, wenn er im Luftfahrzeug angeordnet ist,
  - eine Betriebsmarge (CSM) relativ zu der minimalen garantierten Leistung (Wins) des installierten Turbomotors bestimmt, wobei die Betriebsmarge (CSM) der Verarbeitungseinheit über ein System (55) zur Überwachung der Funktionsfähigkeit des Motors erstellt und übermittelt wird,

  - die theoretische Leistung (Wt) bestimmt, wobei die theoretische Leistung (Wt) gleich der Summe der Betriebsmarge (CSM) und der minimalen garantierten Leistung des installierten Turbomotors (Wins) ist.

5. Verfahren nach Anspruch 4, **dadurch gekennzeichnet, dass** die Verarbeitungseinheit:

  - eine "minimale, auf einer Versuchsbank garantierte Leistung (Wmini)" genannte Leistung bestimmt, die der Turbomotor entwickeln kann, wenn er auf einer Versuchsbank angeordnet ist,
  - die Installationsverluste (Wpi) bestimmt in Abhängigkeit von einem gespeicherten Modell der Installationsverluste (25),
  - die minimale garantierte Leistung (Wins) des installierten Turbomotors bestimmt, wobei die minimale garantierte Leistung (Wins) des installierten Turbomotors gleich der Differenz der minimalen, auf der Versuchsbank garantierten Leistung (Wmini) und der Installationsverluste (Wpi) ist.

6. Verfahren nach Anspruch 3, **dadurch gekennzeichnet, dass** die Verarbeitungseinheit (21):

  - eine "minimale garantierte Leistung (Wins) des installierten Turbomotors" genannte Leistung, die der Turbomotor entwickeln kann, wenn er in dem Luftfahrzeug angeordnet ist, bestimmt,
  - die theoretische Leistung (Wt) bestimmt:

    ◦ indem zu der minimalen garantierten Leistung (Wins) des installierten Turbomotors eine Betriebsmarge (CSM) hinzugefügt wird, die während einer Überwachung der Funktionsfähigkeit des Motors erhalten wurde, und/oder

    ◦ durch Subtrahieren der Installationsverluste (Wpi), die von einem gespeicherten Modell (25) von Installationsverlusten abhängen, von der minimalen garantierten Leistung (Wins) des installierten Turbomotors.

7. Verfahren nach einem der Ansprüche 5 bis 6, **dadurch gekennzeichnet, dass** das Modell (25) von Informationsverlusten die Installationsverluste (Wpi) in Abhängigkeit von dem Druck (P0) und der Temperatur (T0) der Luft in der Außenumgebung (EXT) und in Abhängigkeit von einer Reisegeschwindigkeit (IAS) des Luftfahrzeugs (1) liefert.

**8.** Verfahren nach einem der Ansprüche 5 bis 6, **dadurch gekennzeichnet, dass** die Verarbeitungseinheit (21) die minimale, auf der Versuchsbank garantierte Leistung (Wmini) bestimmt ausgehend von dem theoretischen Modell (24) des Turbomotors (10), wobei das theoretische Modell (24) des Turbomotors (10) die minimale, auf der Versuchsbank garantierte Leistung (Wmini) in Abhängigkeit von dem Druck (P0) und der Temperatur (T0) der Luft in der Außenumgebung (EXT), der ersten Drehgeschwindigkeit (N1) des Gasgenerators (11) und der zweiten Drehgeschwindigkeit (N2) liefert.

**9.** Verfahren nach einem der Ansprüche 1 bis 8, **dadurch gekennzeichnet, dass** der untere Schwellenwert (SINF) der Temperatur -10 Grad Celsius beträgt.

**10.** Verfahren nach einem der Ansprüche 1 bis 9, **dadurch gekennzeichnet, dass** der obere Schwellenwert (SSUP) der Temperatur +5 Grad Celsius beträgt.

**11.** Verfahren nach einem der Ansprüche 1 bis 10, **dadurch gekennzeichnet, dass** der Schwellenwert der Zeitspanne (STPS) 30 Sekunden beträgt.

**12.** Verfahren nach einem der Ansprüche 1 bis 11, **dadurch gekennzeichnet, dass** der Leistungsschwellenwert (SP) 150 Newtonmeter beträgt.

**13.** Vorrichtung (20) für ein Luftfahrzeug (1) zum Erfassen an Bord eines Luftfahrzeugs (1), ob Vereisungskonditionen vorliegen, wobei das Luftfahrzeug (1) mindestens einen Turbomotor (10) aufweist, wobei der Turbomotor (10) einen Gasgenerator (11) aufweist, der mit mindestens einem Kompressor (12) und einer Verbrennungskammer (13) versehen ist, wobei der Turbomotor (10) eine Leistungseinheit umfasst mit mindestens einer Leistungsturbine (15), die von Gasen gedreht wird, die aus der Verbrennungskammer austreten, wobei die Erfassungsvorrichtung aufweist:

- ein Geschwindigkeitsmessgerät (65) zum Messen einer Drehgeschwindigkeit des Gasgenerators, die "erste Drehgeschwindigkeit" genannt wird,
- ein Drehmomentmesssystem (30) zum Messen des Drehmoments, das von der Leistungseinheit entwickelt wird,

**dadurch gekennzeichnet, dass** die Erfassungsvorrichtung aufweist:

- ein Geschwindigkeitsmesssystem (35) zum Messen einer Drehgeschwindigkeit der Leistungseinheit, die "zweite Drehgeschwindigkeit" genannt wird,

- ein Alarmsystem (40),
- einen Temperaturfühler (45) zum Messen der Temperatur (T0) der Luft einer Außenumgebung (EXT), die außerhalb des Luftfahrzeugs (1) liegt,
- eine Verarbeitungseinheit (21), die mit dem Drehmomentmesssystem (30) sowie dem Geschwindigkeitsmesssystem (35) und dem Alarmsystem (40) und dem Temperaturfühler (45) verbunden ist, wobei die Verarbeitungseinheit (21) eine Speichervorrichtung (23) und einen Rechner (22) aufweist, wobei die Speichervorrichtung (23) ein theoretisches Modell (24) speichert, welches eine Leistung in Abhängigkeit von mindestens der ersten Drehgeschwindigkeit (N1) liefert, wobei der Rechner Befehle der Speichervorrichtung ausführt, um das Verfahren nach einem der Ansprüche 1 bis 12 auszuführen.

**14.** Erfassungsvorrichtung nach Anspruch 13, **dadurch gekennzeichnet, dass** die Erfassungsvorrichtung (30) ein System zur Überwachung der Funktionsfähigkeit des Motors (55) aufweist, das mit der Verarbeitungseinheit (21) zusammenwirkt.

**15.** Erfassungsvorrichtung nach einem der Ansprüche 13 bis 14, **dadurch gekennzeichnet, dass** die Erfassungsvorrichtung (20) ein Model von Installationsverlusten (25) aufweist, das in der Speichervorrichtung (23) gespeichert ist.

**16.** Erfassungsvorrichtung nach einem der Ansprüche 13 bis 15, **dadurch gekennzeichnet, dass** die Erfassungsvorrichtung (20) einen Drucksensor (50) aufweist zum Messen des Drucks (P0) der Luft außerhalb des Luftfahrzeugs (1).

**17.** Erfassungsvorrichtung nach einem der Ansprüche 13 bis 16, **dadurch gekennzeichnet, dass** die Erfassungsvorrichtung (20) eine Geschwindigkeitsmessvorrichtung (60) aufweist zum Messen der Reisegeschwindigkeit (IAS) des Luftfahrzeugs.

**18.** Luftfahrzeug mit einem Turbomotor, **dadurch gekennzeichnet, dass** das Luftfahrzeug (1) eine Erfassungsvorrichtung (20) nach einem der Ansprüche 13 bis 17 aufweist.

**Claims**

**1.** Method for detecting that an aircraft (1) is flying in icing conditions, said aircraft (1) being provided with at least one turboengine (10) receiving air coming from an outside medium (EXT) situated outside the aircraft (1) via an air inlet (17), said turboengine (10) comprising a gas generator (11) provided with at least one compressor (12) and with a combustion chamber (13), said turboengine (10) comprising a power assembly provided with at least one power turbine (15) set in rotation by gases escaping from said combustion chamber,
in which:

- a processing unit (21) determines a real power (Wr) developed by said turboengine (10) as a function of the product of the torque (Tq) developed by said power assembly, measured by a torque measurement system (30), and of a speed of rotation of the power assembly (15) referred to as the "second speed of rotation (N2)" measured by a speed measurement system (35),
- said processing unit (21) determines a theoretical power (Wt) that said turboengine (10) can develop in theory, said theoretical power (Wt) being determined by the processing unit (21) as a function at least of a theoretical model of the turboengine, said theoretical model providing a power as a function at least of a speed of rotation of said gas generator referred to as the "first speed of rotation (N1)" measured by a speed measurement means (65),
- the processing unit (21) determines a difference referred to as the "power difference" ($\varepsilon$) between said real power (Wr) and said theoretical power (Wt),
- the processing unit (21) generates a warning to indicate the presence of icing conditions when:

  ○ said power difference ($\varepsilon$) is greater than a predetermined power threshold (SP) for a duration greater than a time threshold (STPS), and
  ○ an outside temperature (T0) of said outside medium (EXT) measured by a temperature sensor (45) is comprised between a low temperature threshold (SINF) and a high temperature threshold (SSUP).

2. Method according to claim 1,
**characterised in that** the processing unit (21) determines said theoretical power (Wt) as a function of a power referred to as the "bench guaranteed minimum power (Wmini)", said theoretical model (24) of the turboengine providing said bench guaranteed minimum power (Wmini) as a function of the pressure (P0) and of the temperature (T0) of said air in said outside medium (EXT), of said first speed of rotation (N1) and of the second speed of rotation (N2).

3. Method according to any one of claims 1 to 2,
**characterised in that** the processing unit (21) determines said theoretical power as a function of a power referred to as the "bench guaranteed minimum power (Wmini)" corrected with the aid of at least one parameter to be chosen from a list including installation losses (Wpi) representing the power losses resulting from the arrangement of the turboengine (10) on an aircraft (1) and an operating margin (CSM) of the turboengine representing a power margin of the turboengine relative to the bench guaranteed minimum power (Wmini).

4. Method according to any one of claims 1 to 3,
**characterised in that** the processing unit (21):

- determines a power referred to as the "turboengine-installed guaranteed minimum power (Wins)" that the turboengine can develop while arranged on the aircraft,
- determines an operating margin (CSM) relative to said turboengine-installed guaranteed minimum power (Wins), said operating margin (CSM) being established and transmitted to the processing unit by an engine health monitoring system (55),
- determines said theoretical power (Wt), said theoretical power (Wt) being equal to the sum of said operating margin (CSM) and of said turboengine-installed guaranteed minimum power (Wins).

5. Method according to claim 4,
**characterised in that** the processing unit:

- determines a power referred to as the "bench guaranteed minimum power (Wmini)" that the turboengine can develop while arranged on a bench,
- determines installation losses (Wpi) as a function of a stored installation loss model (25),
- determines said turboengine-installed guaranteed minimum power (Wins), said turboengine-installed guaranteed minimum power (Wins) being equal to the difference between said bench guaranteed minimum power (Wmini) and said installation losses (Wpi).

6. Method according to claim 3,
**characterised in that** the processing unit (21):

- determines a power referred to as the "turboengine-installed guaranteed minimum power (Wins)" that the turboengine can develop while arranged on the aircraft,
- determines said theoretical power (Wt):

  ○ by adding to said turboengine-installed guaranteed minimum power (Wins) an operating margin (CSM) obtained during an engine health check, and/or

∘ by subtracting from said turboengine-installed guaranteed minimum power (Wins) installation losses (Wpi) that are a function of a stored installation loss model (25).

7. Method according to any one of claims 5 to 6, **characterised in that** said installation loss model (25) supplies said installation losses (Wpi) as a function of the pressure (P0) and of the temperature (T0) of said air in said outside medium (EXT) and as a function of a travel speed (IAS) of the aircraft (1).

8. Method according to any one of claims 5 to 6, **characterised in that** the processing unit (21) determines said bench guaranteed minimum power (Wmini) from said theoretical model (24) of the turboengine (10), said theoretical model (24) of the turboengine (10) providing said bench guaranteed minimum power (Wmini) as a function of the pressure (P0) and of the temperature (T0) of said air in said outside medium (EXT), of the first speed of rotation (N1) of said gas generator (11) and of the second speed of rotation (N2).

9. Method according to any one of claims 1 to 8, **characterised in that** said low temperature threshold (SINF) is -10 degrees Celsius.

10. Method according to any one of claims 1 to 9, **characterised in that** said high temperature threshold (SSUP) is +5 degrees Celsius.

11. Method according to any one of claims 1 to 10, **characterised in that** said time threshold (STPS) is 30 seconds.

12. Method according to any one of claims 1 to 11, **characterised in that** said power threshold (SP) is 150 newton-metres.

13. Detection device (20) intended for an aircraft (1) in order to detect the presence of icing conditions on board an aircraft (1), said aircraft (1) comprising at least one turboengine (10), said turboengine (10) comprising a gas generator (11) provided with at least one compressor (12) and with a combustion chamber (13), said turboengine (10) comprising a power assembly provided with at least one power turbine (15) set in rotation by gases escaping from said combustion chamber, said detection device comprising:

- a speed measurement means (65) for measuring a speed of rotation of said gas generator referred to as the "first speed of rotation",

- a torque measurement system (30) for measuring the torque developed by said power assembly,

**characterised in that** said detection device comprises:

- a speed measurement system (35) for measuring a speed of rotation of the power assembly referred to as the "second speed of rotation",
- a warning system (40),
- a temperature sensor (45) for measuring the temperature (T0) of the air in an outside medium (EXT) situated outside the aircraft (1),
- a processing unit (21) connected to the torque measurement system (30) and to the speed measurement system (35) and to the warning system (40) and to the temperature sensor (45), said processing unit (21) comprising a storage device (23) and a computer (22), said storage device (23) storing a theoretical model (24) supplying a power as a function at least of the first speed of rotation (N1), said computer executing instructions from said storage device in order to perform the method according to any one of claims 1 to 12.

14. Detection device according to claim 13, **characterised in that** said detection device (20) comprises an engine health monitoring system (55) cooperating with said processing unit (21).

15. Detection device according to any one of claims 13 to 14, **characterised in that** said detection device (20) comprises an installation loss model (25) stored in said storage device (23).

16. Detection device according to any one of claims 13 to 15, **characterised in that** said detection device (20) comprises a pressure sensor (50) for measuring the pressure (P0) of the air outside the aircraft (1).

17. Detection device according to any one of claims 13 to 16, **characterised in that** said detection device (20) comprises a speed measurement device (60) for measuring the travel speed (IAS) of the aircraft.

18. Aircraft provided with a turboengine, **characterised in that** said aircraft (1) comprises a detection device (20) according to any one of claims 13 to 17.

## Fig.1

## Fig.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6304194 B1
- WO 2008138846 A
- EP 2657133 A
- EP 2110314 A
- US 8049147 B
- US 7374404 B
- US 20140090456 A
- GB 2259895 A
- GB 2046690 A
- EP 2623746 A